(19) **Europäisches Patentamt European Patent Office Office européen des brevets**

(11) **EP 1 895 781 B1**

(12) **EUROPEAN PATENT SPECIFICATION**

(45) Date of publication and mention
of the grant of the patent:
**26.05.2010 Bulletin 2010/21**

(51) Int Cl.:
**H04N 9/68** (2006.01)    **H04N 1/60** (2006.01)
**H04N 9/77** (2006.01)

(21) Application number: **06254548.8**

(22) Date of filing: **31.08.2006**

(54) **Method of and apparatus for adjusting colour saturation**

Vorrichtung und Verfahren zum Einstellen der Farbsättigung

Dispositif et procédé de réglage de la saturation de couleur

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**05.03.2008 Bulletin 2008/10**

(73) Proprietor: **Vestel Elektronik Sanayi ve Ticaret A.S.**
**45030 Manisa (TR)**

(72) Inventor: **Ozdemir, Huseyin**
**Vestek Elektronik Ar-Ge A.S.**
**34469 Maslak**
**Istanbul (TR)**

(74) Representative: **Freeman, Avi et al**
**Beck Greener**
**Fulwood House**
**12 Fulwood Place**
**London WC1V 6HR (GB)**

(56) References cited:
**US-A- 5 390 034    US-A1- 2002 080 379**

**Description**

The present invention relates to a method of and apparatus for adjusting colour saturation in an input image.

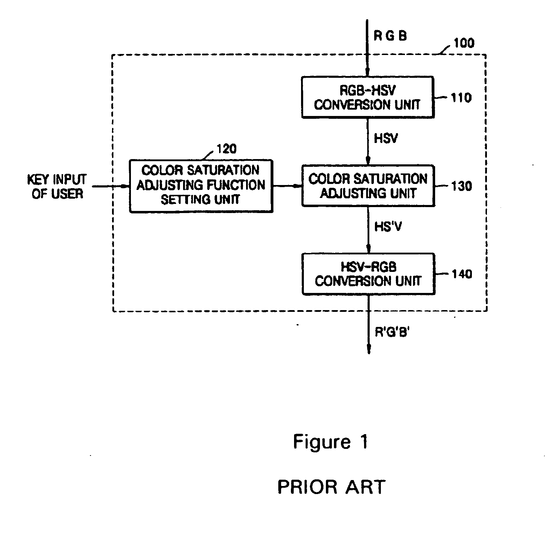

US-A-2005/0047657 discloses a method and apparatus for adjusting colour saturation in an image, the apparatus being shown schematically in Figure 1 and using the HSV colour model. The colour saturation adjusting apparatus 100 of this prior art has an RGB-HSV conversion unit 110 which converts RGB values of the input RGB image signal into corresponding HSV values. A colour saturation adjusting function setting unit 120 allows a user to adjust the degree of colour saturation by inputting colour saturation adjusting values for specific hues (i.e. colours) through a colour saturation adjusting menu. It is not practical for the user to input the colour saturation values for all of the hues. Therefore, practically, the user inputs the colour saturation adjusting values for some representative hues (such as red, green, blue, yellow, cyan, and magenta) and the adjustment values for other, intermediate values are obtained by an interpolation method such as a linear interpolation. A colour saturation adjusting unit 130 then provides the colour saturation adjusting value gain corresponding to the H values and new colour saturation values OUT_S are calculated by applying the colour saturation adjusting function to the original colour saturation value S while the H and V values are fixed. The H, OUT_S, and V values obtained by adjusting the original colour saturation values S in the colour saturation adjusting unit 130 are converted into new RGB values in the HSV-RGB conversion unit 140, which outputs the new RGB values.

A problem with this prior art method is that the user inputs gain values for some representative hues only, and then the system determines the gain values for the remaining hues using a linear interpolation function. Moreover, once the gain value for a hue is set, it is used for every pixel of each video frame. In other words, the colour saturation values of each pixel are adjusted with the same gain values. The method is not adaptive to changing illumination conditions. This can lead to artificial and disturbing results in image regions with high luminance and image regions with high colour saturation.

US-A-2002/0080379 discloses a method and apparatus for adjusting colour saturation in an image in which saturation adjustment data is calculated and stored in advance.

According to a first aspect of the present invention, there is provided a method of adjusting colour saturation in an input image to provide an output image, the method comprising: adjusting a colour saturation value for at least some of the pixels in an input image in dependence on both a brightness value and a colour value for said pixels in the input image to provide an output image; characterised in that: the adjusting comprises for each of said at least some pixels, reading from a brightness values look-up table a brightness scale parameter corresponding to the brightness value of the pixel, reading from a colour values look-up table a colour scale parameter corresponding to the colour saturation value of the pixel, obtaining a final scale parameter for the pixel from the brightness scale parameter and the colour scale parameter, and adjusting the colour saturation value for the pixel in accordance with said final scale parameter; the brightness scale parameters in the brightness values look-up table are calculated after an enhancement level parameter is input by a user and in dependence on said input enhancement level parameter; and, the colour scale parameters in the colour values look-up table are calculated after an enhancement level parameter is input by a user and in dependence on said input enhancement level parameter.

Considering the properties of the human visual system, in general the perceived image contrast of an image depends on two parameters, luminance-based contrast and colour-based contrast. Adjusting the pixel colour saturation values properly using brightness information in addition to colour information for the individual pixels, as in the preferred embodiment of the present invention, increases the perceived image contrast and image details are enhanced. In the preferred embodiment, the colour saturation adjusting values for each pixel are calculated adaptively and separately using the brightness (e.g. luminance) and colour (e.g. chrominance) values of the corresponding pixel.

The colour saturation values for the different pixels may be (and, indeed, in practice will be) adjusted by different amounts in an embodiment of a method of the present invention. In practice, the colour saturation values for some pixels may be increased whereas the colour saturation values for other pixels in the same image or video frame may be decreased. This is in contrast to prior art methods, including that of US-A-2005/0047657 discussed above, in which the colour saturation values for the pixels are all changed by the same amount or factor.

The look-up tables play an important part in respect of performance of the method, both in terms of computational efficiency and in achieving the optimal adjustment of the colour saturation values.

In an embodiment, the brightness scale parameters in the brightness values look-up table are a function of the brightness values of pixels. In an embodiment, the colour scale parameters in the colour values look-up table are a function of the colour saturation values of pixels.

The functions used to obtain the brightness scale parameters and the colour scale parameters can in general be any suitable function, such as a linear function. However, good results are obtained by an appropriate trigonometric function for each.

In an embodiment, said final scale parameter for a pixel is the average of the brightness scale parameter and the colour scale parameter for said pixel. Taking the average is mathematically and therefore computationally simple and provides good results. Nevertheless, other ways of combining the brightness scale parameters and the colour scale parameters to obtain the final scale parameters may be used, such as by using a weighted average of the brightness scale parameters and the colour scale parameters.

In an embodiment, the brightness scale parameter has relatively small values at both low and high brightness values and a relatively high value at mid-range brightness values.

In an embodiment, the colour scale parameter has a small value at low colour saturation values, increases to a maximum and then decreases with increasing colour saturation value to be at a very small value at high colour saturation values, said very small value being less than said small value.

These preferred variations for the brightness scale parameter and the colour scale parameter, which may be obtained from the preferred trigonometric functions mentioned briefly above, provide for good overall results.

In one embodiment, for each pixel, the colour saturation values are at least one of Cb (the blue chroma component) and Cr (the red chroma component) and the brightness value is Y (the luma component) in the YCbCr model. Because the YCbCr model directly provides chroma components, the preferred embodiment makes use of this model. Nevertheless, it will be understood that other models that separate brightness and colour may be used. In any event, in general, as is well know, it is possible to convert from one model (such as the RGB model) to another (such as the YCbCr model) very easily.

In an embodiment, the colour saturation value on which the adjustment of the colour value depends is the greater of absolute value of (Cb-128) and absolute value of (Cr-128) for the pixel.

According to a second aspect of the present invention, there is provided apparatus for adjusting colour saturation in an input image to provide an output image, the apparatus comprising: a colour value adjuster arranged to adjust a colour saturation value for at least some of the pixels in an input image in dependence on both a brightness value and a colour value for said pixels in the input image to provide an output image; characterised in that: the apparatus is arranged for each of said at least some pixels to read from a brightness values look-up table a brightness scale parameter corresponding to the brightness value of the pixel, to read from a colour values look-up table a colour scale parameter corresponding to the colour saturation value of the pixel, to obtain a final scale parameter for the pixel from the brightness scale parameter and the colour scale parameter, and to adjust the colour saturation value for the pixel in accordance with said final scale parameter; the apparatus is arranged so that the brightness scale parameters in the brightness values look-up table are calculated after an enhancement level parameter is input by a user and in dependence on said input enhancement level parameter; and, the apparatus is arranged so that the colour scale parameters in the colour values look-up table are calculated after an enhancement level parameter is input by a user and in dependence on said input enhancement level parameter.

The preferred apparatus and/or method may be incorporated into any apparatus and/or method that is used to adjust the colour saturation of a digital image, including for example an image processor used in a television set or the like, printers, digital cameras, television broadcast capture cards, digital image processing software which may be used in many applications, etc., etc. The methods described herein may be carried out by appropriate software running on appropriate computer equipment. The software may be embedded in an integrated circuit, the integrated circuit being adapted for performing, or for use in the performance of, the relevant processes. Many of the processing steps may be carried out using software, dedicated hardware (such as ASICs), or a combination.

Embodiments of the present invention will now be described by way of example with reference to the accompanying drawings, in which:

Fig. 1 shows schematically a prior art apparatus;

Fig. 2 is a schematic block diagram showing an overview of an example of an embodiment of the present invention;

Fig. 3 is a schematic block diagram showing an example of an embodiment of the present invention in more detail;

Figs. 4 and 5 respectively show examples of variation of brightness and colour scale parameters with brightness and colour value respectively; and,

Figs. 6 and 7 respectively show a perspective view and a slice of the final scale parameter and its variation with both brightness and colour value.

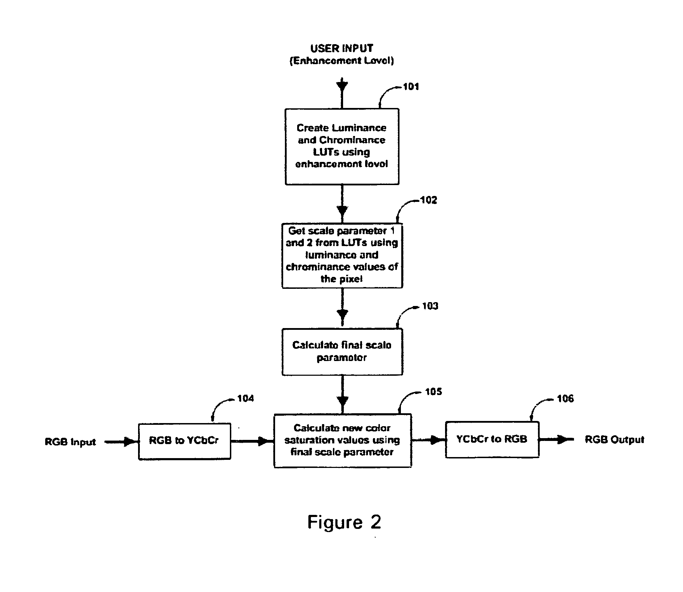

Referring first to Figure 2, in overview an example of an embodiment of the present invention operates as follows. As the first step, the user inputs an enhancement level parameter to the system. The enhancement level parameter determines how mild or how strong the adjustment is. In the preferred embodiment, this is the parameter that determines the data range of look-up tables (LUTs, discussed further below) that are used. As the value of the enhancement level parameter increases, the maximum values in the look-up tables increase and the enhancement is stronger, and vice versa.

In step 101, separate luminance and chrominance LUTs are created using the enhancement level parameter.

In step 102, a first scale parameter 1 ("scaleluma") is read from the luminance LUT using a luminance value (Y) of the pixel being processed. A second scale parameter 2 ("scalechroma") is read from the chrominance LUT using chrominance values (Cb and Cr) of the pixel.

In step 103, a final scale parameter is calculated using the scaleluma and scalechroma parameters which are read from the luminance and chrominance LUTs in step 102. This final scale parameter is used to adjust the colour saturation values of the pixel.

In step 104, RGB values of the input image are converted to YCbCr values in a manner that may be known per se. Since luminance (Y) and chrominance (Cb and Cr) values are separate in the YCbCr colour model, this preferred embodiment directly relates to the YCbCr colour model. Nevertheless, it will be understood that the present invention can be applied in cases where different colour models are used, provided that a brightness value and a colour value are available for each pixel, with appropriate conversion between colour models being carried out as necessary.

In step 105, new colour saturation values are calculated for at least some of the pixels, preferably a majority of the pixels, and most preferably for each pixel, in any case using the original colour saturation values of the pixel and the final scale parameter. The new colour saturation values are checked for overflow and underflow situations. If underflow or overflow occurs, the scale parameter is calculated again to prevent a hue change. The colour saturation values are calculated again using new scale parameter.

In step 106, YCbCr values of the output image are converted to RGB values.

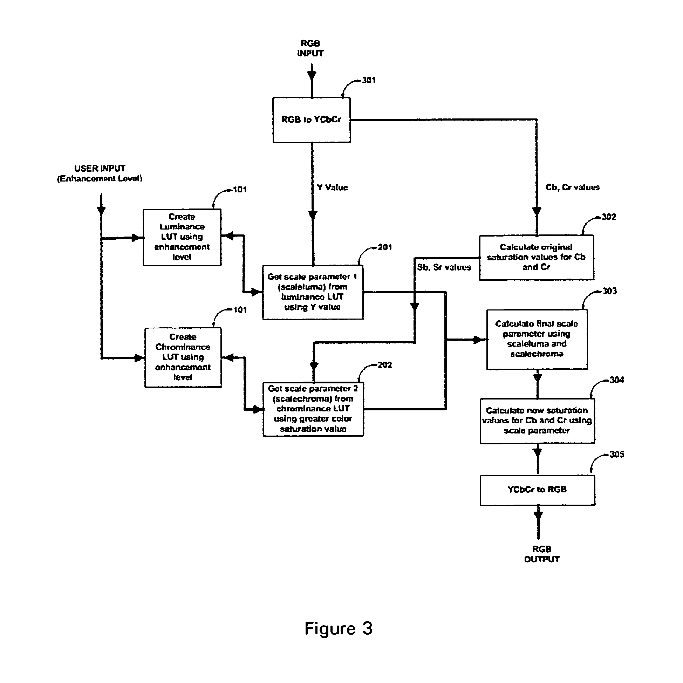

Referring now to Figure 3, in more detail, the example of Figure 2 operates as follows. The user inputs the enhancement level parameter to the system, using for example a button on the display system concerned (e.g. on a television set, or a monitor of a computer in which the method is implemented, or the like) or a remote control, etc. This parameter depends on the user preference and determines the data range of the two look-up tables (LUTs). This parameter determines how mild or how strong the adjustment is. As the value of the enhancement level parameter increases, maximum values in the look-up tables increase and the colour saturation adjustment is stronger, and vice versa. In one embodiment, the enhancement level parameter has a value in a range of 0 to 2. When the value of the enhancement level parameter is 0, the original colour saturation values are preserved. In the following discussion for the purposes of illustration, according to an exemplary embodiment of one implementation of the system, the value of the enhancement level parameter is 0.8.

The next step is to create the look-up tables (LUTs) for luminance and chrominance values. These two LUTs are very important for the performance of the system as they are responsible for the increased image contrast. These LUTs are used to store the scaleluma and scalechroma parameters corresponding to every luminance and chrominance value. The LUTs can be created by a number of different methods, for example using linear or trigonometric functions. It has been found that, in general, trigonometric functions give better results. In one exemplary embodiment of the system, the LUTs can be created using the functions below.

In step 101, the luminance LUT is created. An example of an appropriate C code is:

```
for (int Y=0; Y <= 255; Y++) {
lumalut[Y] = 1+csat*sin(Y*pi/255);
}
```

In step 101, the chrominance LUT is also created. An example of an appropriate C code is:

```
for (int Y=0; Y <= 127; Y++) {
chromalut[Y] = 1+csat*sin(Y*pi/86);
}
```

In each case, "csat" denotes the enhancement level parameter as set by the user, "Y" denotes pixel luminance and "S" denotes pixel colour saturation. There are two S values for one pixel, Sb and Sr, where Sb=abs(Cb-128) and Sr=abs(Cr-128). In order to reduce the risk of overflow and underflow, as will be seen below, the greater of the Sb, Sr pair is used while accessing the chrominance LUT.

In this embodiment of the system, 8-bit registers are used to store Y, Cb and Cr values. Accordingly, Y, Cb and Cr values are in a range of 0 to 255 and S value is in a range of 0 to 127 in unsigned notation. (when an integer is declared as unsigned, this means that the most significant bit is taken as significant data rather than a sign.)

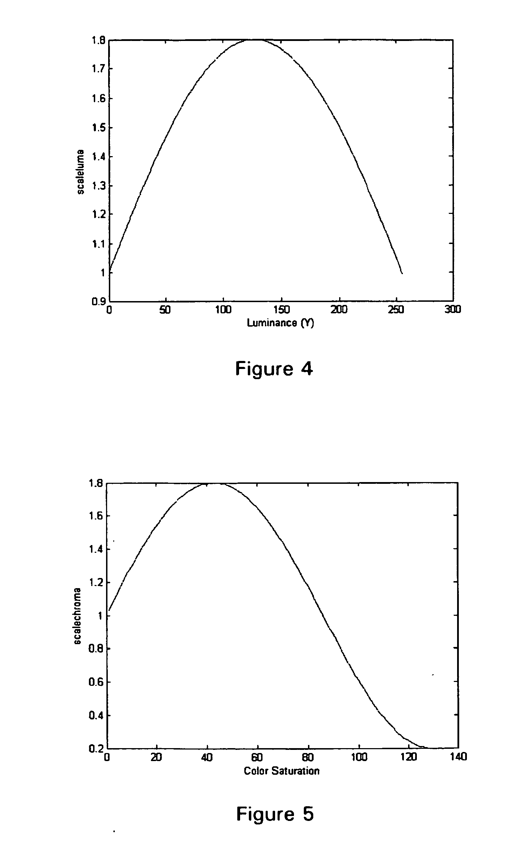

The resulting luminance LUT graph for csat=0.8 is shown in Figure 4 and the resulting chrominance LUT graph for csat=0.8 is shown in Figure 5.

From Figure 4, it will be seen that scaleluma is reduced as the luminance of the pixel approaches 0 or 255. So, when the luminance is very high or very low, luminance-based contrast dominates colour-based contrast. scaleluma takes its maximum value when the luminance of the pixel is 128.

From Figure 5, it will be seen that scalechroma initially increases as the colour saturation value (the greater of the Sb, Sr pair) increases from 0. scalechroma then decreases as the colour saturation value increases above about 45 and scalechroma drops below 1 as the colour saturation value exceeds 86.

Returning to Figure 3, in step 301, RGB values of the pixels of the input image are converted to corresponding YCbCr values using the equations below:

$$Y = 0.257R + 0.504G + 0.098B + 16$$

$$Cb = -0.148R - 0.291G + 0.439B + 128$$

$$Cr = 0.439R - 0.368G - 0.071B + 128$$

It will be understood that these equations are relevant when converting an original image that is in RGB format to the YCbCr model and that other, similar equations may be used if the original image is in a format other than RGB and/or if it is desired to convert to a model other than the YCbCr model.

In step 201, the scaleluma parameter is read from the luminance LUT using the luminance value of the pixel being processed. An example of an appropriate C code is:

```
scaleluma = lumalut[Y[r][c]];
```

where [r][c] denotes row and column coordinates of the pixel in the image.

In step 302, first the colour saturation values Sb, Sr are calculated for both of the chrominance components Cb, Cr of the pixel being processed. An example of an appropriate C code is:

```
Sb=abs(Cb[r][c]-128);
```

```
Sr=abs(Cr[r][c]-128);
```

As mentioned above, the greater of these colour saturation values is used to access the chrominance LUT in order to prevent or minimise the risk of overflow and underflow. Thus, in step 202, a comparison is made between the colour saturation values of the pixel being processed to find the greater colour saturation value. An example of an appropriate C code is:

```
if (Sb>Sr) {
scalechroma=chromalut[Sb];
}
else
{
scalechroma=chromalut[Sr]
}
```

Then, still in step 202, the scalechroma parameter for the pixel being processed is read from the chrominance LUT using the greater of the colour saturation values Sb and Sr.

In step 303, the final "scale" parameter for the pixel being processed is calculated using the scaleluma and scalechroma parameters. In one embodiment, these two parameters can be simply averaged to calculate the final "scale" parameter, i.e.

```
scale = (scaleluma + scalechroma)/2.
```

It will be understood that a different method can be used to obtain the final scale parameter. For example, non-linear functions may be used to add the scaleluma and scalechroma parameters in a non-linear or a weighted manner.

In short, if the value of the final scale parameter is greater than one, then colour saturation values of the pixel being processed are increased. If the value of the final scale parameter is less than one, then colour saturation values of the pixel being processed are decreased.

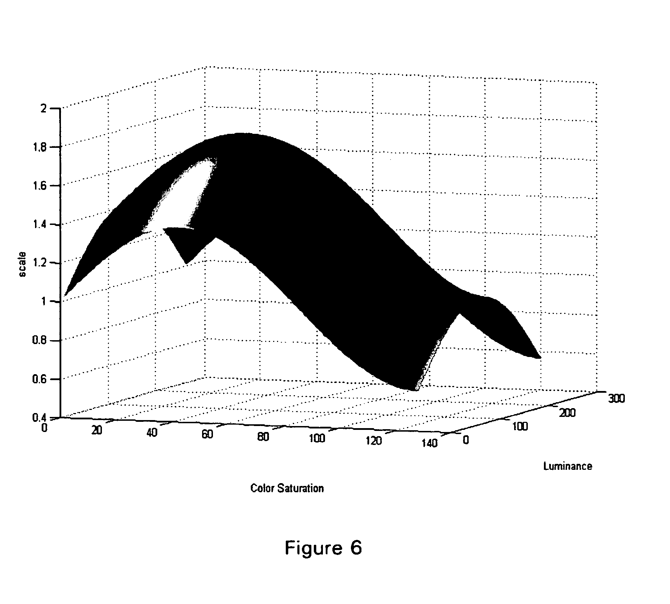

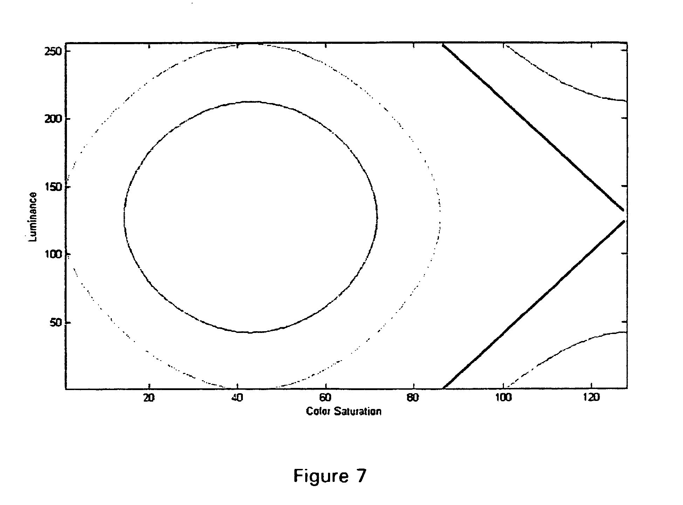

Figure 6 shows the resulting surface graph for the scale parameter for the case where csat=0.8 and Figure 7 shows the corresponding contour map. As can be seen, in this example if the original colour saturation value is less than 86, then the colour saturation value is increased by an amount that depends on the value of scaleluma. If the original colour saturation value is greater than 86, then the colour saturation value is decreased or increased depending on the value of scaleluma because the value of the final scale parameter depends on both scaleluma and scalechroma, in either case the amount of increase or decrease varying accordingly. Figure 7 shows quite clearly the regions where the scale parameter is greater than one and the regions where scale parameter is less than one. In particular, the triangles on the right side of the black lines are saturation-decreasing regions as the scale parameter is less than "1" in these triangular regions. If the colour saturation and luminance values of a pixel fit one of these triangular regions, then the colour saturation values for that pixel are decreased to increase the perceived image contrast.

Returning to Figure 3, in step 304 new colour saturation values are calculated for both color components of the pixel as follows:

$$\texttt{Cbb[r][c]=128+(Cb[r][c]-128)*scale;}$$

$$\texttt{Crr[r][c]=128+(Cr[r][c]-128)*scale;}$$

where Cbb[r][c] is the new value of Cb[r][c] and Crr[r][c] is the new value of Cr[r] [c].

After calculating the new colour saturation values, a check is made whether overflow or underflow has occurred. If so, then the new colour saturation value is accepted as 0 or 255 in underflow or overflow conditions respectively, the scale parameter is calculated again, and the new scale parameter is used to adjust the Cbb and Crr values to prevent hue change.

In step 305, YCbCr values of the enhanced image are converted to RGB values using the equations below:

$$\texttt{R' = 1.164(Y - 16) + 1.596(Cr - 128)}$$

$$\texttt{G' = 1.164(Y - 16) - 0.813(Cr - 128) - 0.392(Cb - 128)}$$

$$\texttt{B' = 1.164(Y - 16) + 2.017(Cb - 128)}$$

to find the modified RGB values R', G' and B' for the pixel in the enhanced image in RGB format.

This process is carried out on other pixels of the input image, preferably is carried out on a majority of the pixels in the input image, and, most preferably, is carried out on all pixels of the input image.

In summary, the preferred embodiment uses separate saturation gain parameters for each pixel taking into account the luminance and saturation values of the pixels. By calculating separate parameters, the preferred embodiment can provide colour saturation or desaturation for separate pixels of a picture depending on their brightness (luminance in the example above) and colour (chrominance in the example above), which not only provides an effective colour saturation but also creates a local contrast enhancement effect. The preferred algorithms to obtain the look-up tables decreases computational complexity and provides effective real-time performance.

Embodiments of the present invention have been described with particular reference to the examples illustrated. However, it will be appreciated that variations and modifications may be made to the examples described within the scope of the present invention.

**EP 1 895 781 B1**

**Claims**

1. A method of adjusting colour saturation in an input image to provide an output image, the method comprising:

   adjusting (105) a colour saturation value for at least some of the pixels in an input image in dependence on both a brightness value and a colour value for said pixels in the input image to provide an output image; **characterised in that**:

   the adjusting (105) comprises for each of said at least some pixels, reading (102) from a brightness values look-up table a brightness scale parameter corresponding to the brightness value of the pixel, reading (102) from a colour values look-up table a colour scale parameter corresponding to the colour saturation value of the pixel, obtaining (103) a final scale parameter for the pixel from the brightness scale parameter and the colour scale parameter, and adjusting (105) the colour saturation value for the pixel in accordance with said final scale parameter;

   the brightness scale parameters in the brightness values look-up table are calculated (101) after an enhancement level parameter is input by a user and in dependence on said input enhancement level parameter; and,

   the colour scale parameters in the colour values look-up table are calculated (101) after an enhancement level parameter is input by a user and in dependence on said input enhancement level parameter.

2. A method according to claim 1, wherein the brightness scale parameters in the brightness values look-up table are a function of the brightness values of pixels.

3. A method according to claim 2, wherein the function of the brightness values is a trigonometric function.

4. A method according to any of claims 1 to 3, wherein the colour scale parameters in the colour values look-up table are a function of the colour saturation values of pixels.

5. A method according to claim 4, wherein the function of the colour saturation values is a trigonometric function.

6. A method according to any of claims 1 to 5, wherein said final scale parameter for a pixel is the average of the brightness scale parameter and the colour scale parameter for said pixel.

7. A method according to any of claims 1 to 6, wherein the brightness scale parameter has relatively small values at both low and high brightness values and a relatively high value at mid-range brightness values.

8. A method according to any of claims 1 to 7, wherein the colour scale parameter has a small value at low colour saturation values, increases to a maximum and then decreases with increasing colour saturation value to be at a very small value at high colour saturation values, said very small value being less than said small value.

9. A method according to any of claims 1 to 8, wherein for each pixel, the colour saturation values are at least one of Cb (the blue chroma component) and Cr (the red chroma component) and the brightness value is Y (the luma component) in the YCbCr model.

10. A method according to claim 9, wherein the colour saturation value on which the adjustment of the colour saturation value depends is the greater of absolute value of (Cb-128) and absolute value of (Cr-128) for the pixel.

11. Apparatus for adjusting colour saturation in an input image to provide an output image, the apparatus comprising:

   a colour value adjuster (105) arranged to adjust a colour saturation value for at least some of the pixels in an input image in dependence on both a brightness value and a colour value for said pixels in the input image to provide an output image; **characterised in that**:

   the apparatus is arranged for each of said at least some pixels to read (102) from a brightness values look-up table a brightness scale parameter corresponding to the brightness value of the pixel, to read (102) from a colour values look-up table a colour scale parameter corresponding to the colour saturation value of the pixel, to obtain (103) a final scale parameter for the pixel from the brightness scale parameter and the colour scale parameter, and to adjust (105) the colour saturation value for the pixel in accordance with said final scale parameter;

the apparatus is arranged so that the brightness scale parameters in the brightness values look-up table are calculated (101) after an enhancement level parameter is input by a user and in dependence on said input enhancement level parameter; and,

the apparatus is arranged so that the colour scale parameters in the colour values look-up table are calculated (101) after an enhancement level parameter is input by a user and in dependence on said input enhancement level parameter.

**12.** Apparatus according to claim 11, wherein the brightness scale parameters in the brightness values look-up table are a function of the brightness values of pixels.

**13.** Apparatus according to claim 12, wherein the function of the brightness values is a trigonometric function.

**14.** Apparatus according to any of claims 11 to 13, wherein the colour scale parameters in the colour values look-up table are a function of the colour saturation values of pixels.

**15.** Apparatus according to claim 14, wherein the function of the colour saturation values is a trigonometric function.

**16.** Apparatus according to any of claims 11 to 15, wherein said final scale parameter for a pixel is the average of brightness scale parameter and the colour scale parameter for said pixel.

**17.** Apparatus according to any of claims 11 to 16, wherein the brightness scale parameter has relatively small values at both low and high brightness values and a relatively high value at mid-range brightness values.

**18.** Apparatus according to any of claims 11 to 17, wherein the colour scale parameter has a small value at low colour saturation values, increases to a maximum and then decreases with increasing colour saturation value to be at a very small value at high colour saturation values, said very small value being less than said small value.

**19.** Apparatus according to any of claims 11 to 18, wherein for each pixel, the colour saturation values are at least one of Cb (the blue chroma component) and Cr (the red chroma component) and the brightness value is Y (the luma component) in the YCbCr model.

**20.** Apparatus according to claim 19, wherein the colour saturation value on which the adjustment of the colour saturation value depends is the greater of absolute value of (Cb-128) and absolute value of (Cr-128) for the pixel.

**Patentansprüche**

**1.** Verfahren zum Justieren der Farbsättigung in einem Eingabebild zum Erzeugen eines Ausgabebildes, wobei das Verfahren Folgendes umfasst:

Justieren (105) eines Farbsättigungswertes für mindestens einige der Pixel in einem Eingabebild in Abhängigkeit von sowohl einem Helligkeitswert als auch einem Farbwert für die Pixel in dem Eingabebild zum Erzeugen eines Ausgabebildes; **dadurch gekennzeichnet, dass**:

das Justieren (105) für jedes der mindestens einigen Pixel Folgendes umfasst: Lesen (102) - aus einer Helligkeitswerte-Nachschlagetabelle - eines Helligkeitsskalenparameters, der dem Helligkeitswert des Pixels entspricht; Lesen (102) - aus einer Farbwerte-Nachschlagetabelle - eines Farbskalenparameters, der dem Farbsättigungswert des Pixels entspricht; Erhalten (103) eines Endskalenparameters für das Pixel aus dem Helligkeitsskalenparameter und dem Farbskalenparameter; und Justieren (105) des Farbsättigungswertes für das Pixel gemäß dem Endskalenparameter;

die Helligkeitsskalenparameter in der Helligkeitswerte-Nachschlagetabelle berechnet werden (101), nachdem ein Erhöhungspegelparameter durch einen Nutzer eingegeben wurde, und in Abhängigkeit von dem eingegebenen Erhöhungspegelparameter berechnet werden (101); und

die Farbskalenparameter in der Farbwerte-Nachschlagetabelle berechnet werden (101), nachdem ein Erhöhungspegelparameter durch einen Nutzer eingegeben wurde, und in Abhängigkeit von dem eingegebenen Erhöhungspegelparameter berechnet werden (101).

**2.** Verfahren nach Anspruch 1, wobei die Helligkeitsskalenparameter in der Helligkeitswerte-Nachschlagetabelle eine Funktion der Helligkeitswerte von Pixeln sind.

**3.** Verfahren nach Anspruch 2, wobei die Funktion der Helligkeitswerte eine trigonometrische Funktion ist.

**4.** Verfahren nach einem der Ansprüche 1 bis 3, wobei die Farbskalenparameter in der Farbwerte-Nachschlagetabelle eine Funktion der Farbsättigungswerte von Pixeln sind.

**5.** Verfahren nach Anspruch 4, wobei die Funktion der Farbsättigungswerte eine trigonometrische Funktion ist.

**6.** Verfahren nach einem der Ansprüche 1 bis 5, wobei der Endskalenparameter für ein Pixel der Durchschnitt des Helligkeitsskalenparameters und des Farbskalenparameters für das Pixel ist.

**7.** Verfahren nach einem der Ansprüche 1 bis 6, wobei der Helligkeitsskalenparameter relativ kleine Werte sowohl bei niedrigen als auch bei hohen Helligkeitswerten hat und einen relativ hohen Wert bei Helligkeitswerten im mittleren Bereich hat.

**8.** Verfahren nach einem der Ansprüche 1 bis 7, wobei der Farbskalenparameter einen kleinen Wert bei niedrigen Farbsättigungswerten hat, auf ein Maximum ansteigt und dann mit zunehmendem Farbsättigungswert abnimmt, bis er bei hohen Farbsättigungswerten einen sehr kleinen Wert hat, wobei der sehr kleine Wert kleiner ist als der kleine Wert.

**9.** Verfahren nach einem der Ansprüche 1 bis 8, wobei für jedes Pixel die Farbsättigungswerte entweder Cb (die blaue Chroma-Komponente) oder Cr (die rote Chroma-Komponente) oder beides im YCbCr-Modell sind und der Helligkeitswert Y (die Luma-Komponente) im YCbCr-Modell ist.

**10.** Verfahren nach Anspruch 9, wobei der Farbsättigungswert, von dem die Justierung des Farbsättigungswertes abhängt, der absolute Wert von (Cb-128) oder der absolute Wert von (Cr-128) für das Pixel ist, je nachdem, welcher Wert der größere ist.

**11.** Vorrichtung zum Justieren der Farbsättigung in einem Eingabebild zum Erzeugen eines Ausgabebildes, wobei die Vorrichtung Folgendes umfasst:

einen Farbwertjustierer (105), der dafür ausgelegt ist, einen Farbsättigungswert für mindestens einige der Pixel in einem Eingabebild in Abhängigkeit von sowohl einem Helligkeitswert als auch einem Farbwert für die Pixel in dem Eingabebild zu justieren, um ein Ausgabebild zu erzeugen; **dadurch gekennzeichnet, dass**:

die Vorrichtung dafür ausgelegt ist, für jedes der mindestens einigen Pixel aus einer Helligkeitswerte-Nachschlagetabelle einen Helligkeitsskalenparameter, der dem Helligkeitswert des Pixels entspricht, zu lesen (102); aus einer Farbwerte-Nachschlagetabelle einen Farbskalenparameter, der dem Farbsättigungswert des Pixels entspricht, zu lesen (102); einen Endskalenparameter für das Pixel aus dem Helligkeitsskalenparameter und dem Farbskalenparameter zu erhalten (103); und den Farbsättigungswert für das Pixel gemäß dem Endskalenparameter zu justieren (105);
die Vorrichtung so konfiguriert ist, dass die Helligkeitsskalenparameter in der Helligkeitswerte-Nachschlagetabelle berechnet werden (101), nachdem ein Erhöhungspegelparameter durch einen Nutzer eingegeben wurde, und in Abhängigkeit von dem eingegebenen Erhöhungspegelparameter berechnet werden (101); und
die Vorrichtung so konfiguriert ist, dass die Farbskalenparameter in der Farbwerte-Nachschlagetabelle berechnet werden (101), nachdem ein Erhöhungspegelparameter durch einen Nutzer eingegeben wurde, und in Abhängigkeit von dem eingegebenen Erhöhungspegelparameter berechnet werden (101).

**12.** Vorrichtung nach Anspruch 11, wobei die Helligkeitsskalenparameter in der Helligkeitswerte-Nachschlagetabelle eine Funktion der Helligkeitswerte von Pixeln sind.

**13.** Vorrichtung nach Anspruch 12, wobei die Funktion der Helligkeitswerte eine trigonometrische Funktion ist.

**14.** Vorrichtung nach einem der Ansprüche 11 bis 13, wobei die Farbskalenparameter in der Farbwerte-Nachschlagetabelle eine Funktion der Farbsättigungswerte von Pixeln sind.

**15.** Vorrichtung nach Anspruch 14, wobei die Funktion der Farbsättigungswerte eine trigonometrische Funktion ist.

**16.** Vorrichtung nach einem der Ansprüche 11 bis 15, wobei der Endskalenparameter für ein Pixel der Durchschnitt des Helligkeitsskalenparameters und des Farbskalenparameters für das Pixel ist.

**17.** Vorrichtung nach einem der Ansprüche 11 bis 16, wobei der Helligkeitsskalenparameter relativ kleine Werte sowohl bei niedrigen als auch bei hohen Helligkeitswerten hat und einen relativ hohen Wert bei Helligkeitswerten im mittleren Bereich hat.

**18.** Vorrichtung nach einem der Ansprüche 11 bis 17, wobei der Farbskalenparameter einen kleinen Wert bei niedrigen Farbsättigungswerten hat, auf ein Maximum ansteigt und dann mit zunehmendem Farbsättigungswert abnimmt, bis er bei hohen Farbsättigungswerten einen sehr kleinen Wert hat, wobei der sehr kleine Wert kleiner ist als der kleine Wert.

**19.** Vorrichtung nach einem der Ansprüche 11 bis 18, wobei für jedes Pixel die Farbsättigungswerte entweder Cb (die blaue Chroma-Komponente) oder Cr (die rote Chroma-Komponente) oder beides im YCbCr-Modell sind und der Helligkeitswert Y (die Luma-Komponente) im YCbCr-Modell ist.

**20.** Vorrichtung nach Anspruch 19, wobei der Farbsättigungswert, von dem die Justierung des Farbsättigungswertes abhängt, der absolute Wert von (Cb-128) oder der absolute Wert von (Cr-128) für das Pixel ist, je nachdem, welcher Wert der größere ist.

**Revendications**

**1.** Procédé de réglage de la saturation de couleur dans une image d'entrée pour fournir une image de sortie, le procédé comprenant :

le réglage (105) d'une valeur de saturation de couleur pour au moins certains des pixels dans une image d'entrée en fonction à la fois d'une valeur de luminosité et d'une valeur de couleur pour lesdits pixels dans l'image d'entrée pour fournir une image de sortie, **caractérisé en ce que** :

le réglage (105) comprend pour chacun desdits au moins certains pixels, la lecture (102) dans une table de recherche de valeurs de luminosité d'un paramètre d'échelle de luminosité correspondant à la valeur de luminosité du pixel, la lecture (102) dans une table de recherche de valeurs de couleur d'un paramètre d'échelle de couleur correspondant à la valeur de saturation de couleur du pixel, l'obtention (103) d'un paramètre d'échelle final pour le pixel à partir du paramètre d'échelle de luminosité et du paramètre d'échelle de couleur, et le réglage (105) de la valeur de saturation de couleur pour le pixel en fonction dudit paramètre d'échelle final,
les paramètres d'échelle de luminosité dans la table de recherche de valeurs de luminosité sont calculés (101) après qu'un paramètre de niveau d'amélioration est entré par un utilisateur et en fonction dudit paramètre de niveau d'amélioration entré, et
les paramètres d'échelle de couleur dans le tableau de recherche de valeurs de couleur sont calculés (101) après qu'un paramètre de niveau d'amélioration est entré par un utilisateur et en fonction dudit paramètre de niveau d'amélioration entré.

**2.** Procédé selon la revendication 1, dans lequel les paramètres d'échelle de luminosité dans le tableau de recherche de valeurs de luminosité sont une fonction des valeurs de luminosité des pixels.

**3.** Procédé selon la revendication 2, dans lequel la fonction des valeurs de luminosité est une fonction trigonométrique.

**4.** Procédé selon l'une quelconque des revendications 1 à 3, dans lequel les paramètres d'échelle de couleur dans le tableau de recherche de valeurs de couleur sont une fonction des valeurs de saturation de couleur des pixels.

**5.** Procédé selon la revendication 4, dans lequel la fonction des valeurs de saturation de couleur est une fonction trigonométrique.

**6.** Procédé selon l'une quelconque des revendications 1 à 5, dans lequel ledit paramètre d'échelle final pour un pixel est la moyenne du paramètre d'échelle de luminosité et du paramètre d'échelle de couleur pour ledit pixel.

7. Procédé selon l'une quelconque des revendications 1 à 6, dans lequel le paramètre d'échelle de luminosité a des valeurs relativement petites à des valeurs de luminosité basse et haute et une valeur relativement grande à des valeurs de luminosité intermédiaire.

8. Procédé selon l'une quelconque des revendications 1 à 7, dans lequel le paramètre d'échelle de couleur a une petite valeur à des valeurs de saturation de couleur basse, augmente à un maximum puis diminue avec l'augmentation de la valeur de saturation de couleur pour être à une valeur très petite à des valeurs de saturation de couleur haute, ladite valeur très petite étant inférieure à ladite petite valeur.

9. Procédé selon l'une quelconque des revendications 1 à 8, dans lequel pour chaque pixel, les valeurs de saturation de couleur sont au moins l'une de Cb (la composante chroma bleue) et Cr (la composante chroma rouge) et la valeur de luminosité est Y (la composante luma) dans le modèle YCbCr.

10. Procédé selon la revendication 9, dans lequel la valeur de saturation de couleur de laquelle le réglage de la valeur de saturation de couleur dépend est la plus grande de la valeur absolue de (Cb-128) et de la valeur absolue de (Cr-128) pour le pixel.

11. Dispositif de réglage de la saturation de couleur dans une image d'entrée pour fournir une image de sortie, le dispositif comprenant :

un régleur de valeur de couleur (105) agencé pour régler une valeur de saturation de couleur pour au moins certains des pixels dans une image d'entrée en fonction à la fois d'une valeur de luminosité et d'une valeur de couleur pour lesdits pixels dans l'image d'entrée pour fournir une image de sortie **caractérisé en ce que** :

le dispositif est agencé pour chacun desdits au moins certains pixels pour lire (102) dans une table de recherche de valeurs de luminosité un paramètre d'échelle de luminosité correspondant à la valeur de luminosité du pixel, pour lire (102) dans une table de recherche de valeurs de couleur un paramètre d'échelle de couleur correspondant à la valeur de saturation de couleur du pixel, pour obtenir (103) un paramètre d'échelle final pour le pixel à partir du paramètre d'échelle de luminosité et du paramètre d'échelle de couleur, et pour régler (105) la valeur de saturation de couleur pour le pixel en fonction dudit paramètre d'échelle final,
le dispositif est agencé de sorte que les paramètres d'échelle de luminosité dans la table de recherche de valeurs de luminosité sont calculés (101) après qu'un paramètre de niveau d'amélioration est entré par un utilisateur et en fonction dudit paramètre de niveau d'amélioration entré et
le dispositif est agencé de sorte que les paramètres d'échelle de couleur dans le tableau de recherche de valeurs de couleur sont calculés (101) après qu'un paramètre de niveau d'amélioration est entré par un utilisateur et en fonction dudit paramètre de niveau d'amélioration entré.

12. Dispositif selon la revendication 11, dans lequel les paramètres d'échelle de luminosité dans le tableau de recherche de valeurs de luminosité sont une fonction des valeurs de luminosité des pixels.

13. Dispositif selon la revendication 12, dans lequel la fonction des valeurs de luminosité est une fonction trigonométrique.

14. Dispositif selon l'une quelconque des revendications 11 à 13, dans lequel les paramètres d'échelle de couleur dans le tableau de recherche de valeurs de couleur sont une fonction des valeurs de saturation de couleur des pixels.

15. Dispositif selon la revendication 14, dans lequel la fonction des valeurs de saturation de couleur est une fonction trigonométrique.

16. Dispositif selon l'une quelconque des revendications 11 à 15, dans lequel ledit paramètre d'échelle final pour un pixel est la moyenne du paramètre d'échelle de luminosité et du paramètre d'échelle de couleur pour ledit pixel.

17. Dispositif selon l'une quelconque des revendications 11 à 16, dans lequel le paramètre d'échelle de luminosité a des valeurs relativement petites à des valeurs de luminosité basse et haute et une valeur relativement grande à des valeurs de luminosité intermédiaire.

**18.** Dispositif selon l'une quelconque des revendications 11 à 17, dans lequel le paramètre d'échelle de couleur a une petite valeur à des valeurs de saturation de couleur basse, augmente à un maximum puis diminue avec l'augmentation de la valeur de saturation de couleur pour être à une valeur très petite à des valeurs de saturation de couleur haute, ladite valeur très petite étant inférieure à ladite petite valeur.

**19.** Dispositif selon l'une quelconque des revendications 11 à 18, dans lequel pour chaque pixel, les valeurs de saturation de couleur sont au moins l'une de Cb (la composante chroma bleue) et Cr (la composante chroma rouge) et la valeur de luminosité est Y (la composante luma) dans le modèle YCbCr.

**20.** Dispositif selon la revendication 19, dans lequel la valeur de saturation de couleur de laquelle le réglage de la valeur de saturation de couleur dépend est la plus grande de la valeur absolue de (Cb-128) et de la valeur absolue de (Cr-128) pour le pixel.

Figure 1

PRIOR ART

USER INPUT
(Enhancement Level)

┌─────────────────────┐ ──101
│ Create Luminance    │
│ and Chrominance     │
│ LUTs using          │
│ enhancement level   │
└─────────────────────┘

┌─────────────────────┐ ──102
│ Get scale parameter 1│
│ and 2 from LUTs using│
│ luminance and        │
│ chrominance values of│
│ the pixel           │
└─────────────────────┘

┌─────────────────────┐ ──103
│ Calculate final scale│
│ parameter           │
└─────────────────────┘

RGB Input → ┌──────────────┐ ──104 ┌──────────────────────┐ ──105 ┌──────────────┐ ──106
            │ RGB to YCbCr │ →     │ Calculate new color  │ →     │ YCbCr to RGB │ → RGB Output
            └──────────────┘       │ saturation values using│      └──────────────┘
                                   │ final scale parameter │
                                   └──────────────────────┘

Figure 2

EP 1 895 781 B1

RGB
INPUT

RGB to YCbCr — 301

USER INPUT
(Enhancement Level)

Create Luminance LUT using enhancement level — 101

Y Value

Cb, Cr values

Get scale parameter 1 (scaleluma) from luminance LUT using Y value — 201

Calculate original saturation values for Cb and Cr — 302

Sb, Sr values

Create Chrominance LUT using enhancement level — 101

Get scale parameter 2 (scalechroma) from chrominance LUT using greater color saturation value — 202

Calculate final scale parameter using scaleluma and scalechroma — 303

Calculate new saturation values for Cb and Cr using scale parameter — 304

YCbCr to RGB — 305

RGB
OUTPUT

Figure 3

15

Figure 4

Figure 5

Figure 6

Figure 7

**EP 1 895 781 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050047657 A
- US 20020080379 A